# EUROPEAN PATENT APPLICATION

(11) **EP 4 057 724 A1**
(43) Date of publication of application: **14.09.2022**
(21) Application number: 19951334.2
(22) Date of filing: 06.11.2019
(51) Int. Cl.: H04W 72/04

(54) **TERMINAL AND WIRELESS COMMUNICATION METHOD**

(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); GUO, Shaozhen, Beijing 100190 (CN); HOU, Xiaolin, Beijing 100190 (CN)
(74) Representative: Hoffmann Eitle
(86) International application number: PCT/JP2019/043496
(87) International publication number: WO 2021/090403

(57) **Abstract**

A terminal according to an aspect of the present disclosure includes a receiving section that receives one piece of downlink control information for scheduling a plurality of physical uplink shared channels (PUSCHs) to be transmitted simultaneously, the downlink control information including one or more sounding reference signal (SRS) resource indication fields, the one or more SRS resource indication fields indicating a plurality of SRS resources, the plurality of SRS resources corresponding to the plurality of PUSCHs, and a control section that uses each of the plurality of SRS resources for transmission of a corresponding one of the PUSCHs. According to an aspect of the present disclosure, it is possible to appropriately perform simultaneous UL transmission using a plurality of panels.

## Description

### Technical Field

The present disclosure relates to a terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In NR, a UE can use one of a plurality of panels (a plurality of beams) for uplink (UL) transmission. However, study has not been performed sufficiently for simultaneous UL transmission using a plurality of panels. If simultaneous UL transmission using a plurality of panels is not performed appropriately, degradation in system performance such as decrease in throughput may occur.

Thus, an object of the present disclosure is to provide a terminal and a radio communication method that enable simultaneous UL transmission using a plurality of panels to be performed appropriately.

### Solution to Problem

A terminal according to an aspect of the present disclosure includes: a receiving section that receives one piece of downlink control information for scheduling a plurality of physical uplink shared channels (PUSCHs) to be transmitted simultaneously, the downlink control information including one or more sounding reference signal (SRS) resource indication fields, the one or more SRS resource indication fields indicating a plurality of SRS resources, the plurality of SRS resources corresponding to the plurality of PUSCHs; and a control section that uses each of the plurality of SRS resources for transmission of a corresponding one of the PUSCHs.

### Advantageous Effects of Invention

According to an aspect of the present disclosure, it is possible to appropriately perform simultaneous UL transmission using a plurality of panels.

### Brief Description of Drawings

FIG. 1 is a diagram to show an example of association between precoder types and TPMI indices;
FIGS. 2A to 2C are each a diagram to show an example of PUSCH transmission using a plurality of panels;
FIGS. 3A to 3C are diagrams to show an example of schemes 1 to 3 of simultaneous UL transmission using a plurality of panels;
FIG. 4 is a diagram to show an example of association between SRI field values and SRIs for scheme 1;
FIG. 5 is a diagram to show an example of association between SRI field values and SRIs for scheme 1 in a case where the number of SRS resources is two to four;
FIG. 6 is a diagram to show an example of association between SRI field values and SRIs for scheme 1 in a case where the number of SRS resources is six to eight;
FIG. 7 is a diagram to show an example of association between SRS resource sets and PUSCHs;
FIG. 8 is a diagram to show an example of association between values of a precoding information and number of layers field and the numbers of layers and TPMIs;
FIG. 9 is a diagram to show an example of a schematic structure of a radio communication system according to one embodiment;
FIG. 10 is a diagram to show an example of a structure of a base station according to one embodiment;
FIG. 11 is a diagram to show an example of a structure of a user terminal according to one embodiment; and
FIG. 12 is a diagram to show an example of a hardware structure of the base station and the user terminal according to one embodiment.

### Description of Embodiments

### (PUSCH Precoder)

For NR, it is studied that a UE supports at least one of codebook (CB) based transmission and non-codebook (NCB) based transmission.

For example, it is studied that a UE determines a precoder (a precoding matrix) for at least one of CB based and NCB based uplink shared channel (Physical Uplink Shared Channel (PUSCH)) transmissions, by using at least a reference signal for measurement (Sounding Reference Signal (SRS) resource indicator (SRS Resource Indicator (SRI)).

In a case of CB based transmission, the UE may determine a precoder for PUSCH transmission, based on an SRI, a transmitted rank indicator (TRI), a transmitted precoding matrix indicator (TPMI), and the like. In a case of NCB based transmission, the UE may determine a precoder for PUSCH transmission, based on an SRI.

The UE may be notified of the SRI, the TRI, the TPMI, and the like by using downlink control information (DCI). The SRI may be specified through an SRS Resoruce Indicator field (SRI field) in the DCI or may be specified by a parameter "srs-ResourceIndicator" included in an RRC information element "ConfiguredGrantConfig" of a configured grant PUSCH. The TRI and the TPMI may each be specified by a "Precoding information and number of layers" field in the DCI.

The UE may report UE capability information related to a precoder type, and be configured with the precoder type based on the UE capability information by a base station through higher layer signaling. The UE capability information may be information of a precoder type used by the UE in PUSCH transmission (which may be expressed by an RRC parameter "pusch-TransCoherence").

In the present disclosure, for example, the higher layer signaling may be any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. For example, the broadcast information may be master information blocks (MIBs), system information blocks (SIBs), or the like.

The UE may determine a precoder to use for PUSCH transmission, based on information of a precoder type included in PUSCH configuration information notified through higher layer signaling (a "PUSCH-Config" information element in RRC signaling) (which information may be expressed by an RRC parameter "codebookSubset"). The UE may be configured with a subset of a PMI specified by the TPMI, by codebookSubset.

Note that the precoder type may be specified by any of or a combination of at least two of full coherent (fully coherent or coherent), a partial coherent, and a non-coherent (non coherent) (which may be expressed by a parameter such as "fullyAndPartialAndNonCoherent," or "partialAndNonCoherent", for example).

Full coherent may mean that all antenna ports to be used for transmission are synchronized with each other (which may be expressed as being possible to be matched in phase, having the same precoder to be applied, and the like). Partial coherent may mean that some of the antenna ports to be used for transmission are synchronized with each other while the some ports and other ports are not synchronized with each other. Non-coherent may mean that no antenna ports to be used for transmission are synchronized with each other.

Note that the UE supporting full coherent precoder type may be assumed to support partial coherent and non-coherent precoder types. The UE supporting partial coherent precoder type may be assumed to support non-coherent precoder type.

Precoder type may be interpreted as coherency, PUSCH transmission coherence, coherent type, coherence type, codebook type, codebook subset, codebook subset type, and the like.

The UE may determine a precoding matrix corresponding to a TPMI index obtained from DCI for scheduling UL transmission (for example, DCI format 0_1; the same applies hereinafter), from among a plurality of precoders (which may be referred to as precoding matrices, codebooks, and the like) for CB based transmission.

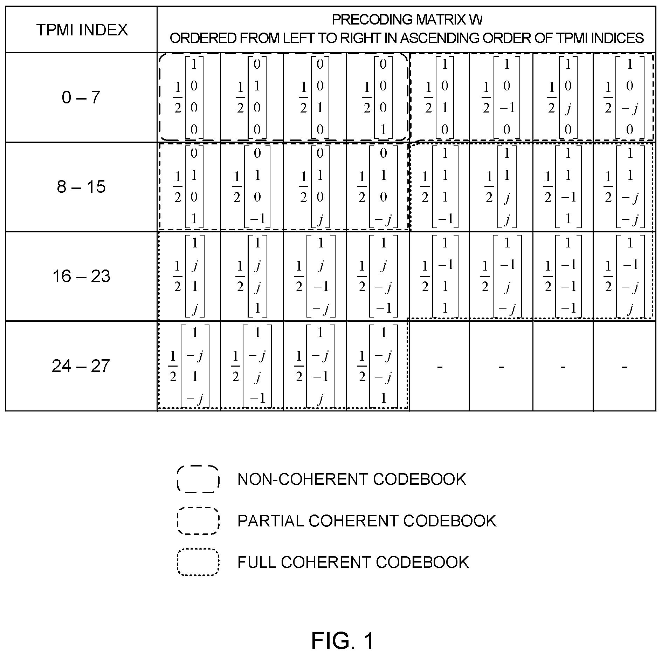

FIG. 1 is a diagram to show an example of association between precoder types and TPMI indices. FIG. 1 corresponds to a table of a precoding matrix W for single layer (rank 1) transmission using four antenna ports in DFT-s-OFDM (Discrete Fourier Transform spread OFDM; transform precoding is enabled).

In FIG. 1, in a case where the precoder type (codebookSubset) is full, partial, and non-coherent (fullyAndPartialAndNonCoherent), the UE is notified of a TPMI indicating any one of 0 to 27 for single layer transmission. In a case where the precoder type is partial and non-coherent (partialAndNonCoherent), the UE is configured with a TPMI indicating any one of 0 to 11 for single layer transmission. In a case where the precoder type is noncoherent (nonCoherent), the UE is configured with a TPMI indicating any one of 0 to 3 for single layer transmission.

Note that, as illustrated in FIG. 1, a precoding matrix with only one of elements of each column being other than 0 may be referred to as a non-coherent codebook. A precoding matrix with only a given number of (not all) elements of each column being other than 0 may be referred to as a partial coherent codebook. A precoding matrix with no element of each column being zero may be referred to as a full coherent codebook.

Non-coherent codebook and partial coherent codebook may be referred to as an antenna selection precoder. Full coherent codebook may be referred to as a non-antenna selection precoder.

Note that, in the present disclosure, partial coherent codebooks may correspond to codebooks obtained by excluding the codebooks corresponding to TPMIs specified for the UE configured with the non-coherent codebook subset (for example, an RRC parameter "codebookSubset" = "nonCoherent") from codebooks (precoding matrices) corresponding to TPMIs specified for the UE configured with a partial coherent codebook subset (for example, an RRC parameter "codebookSubset" = "partialAndNonCoherent") by DCI for codebook based transmission (specifically, codebooks of TPMI = 4 to 11 in a case of single layer transmission using four antenna ports).

Note that, in the present disclosure, full coherent codebooks may correspond to codebooks obtained by excluding the codebooks corresponding to TPMIs specified for the UE configured with the partial coherent codebook subset (for example, an RRC parameter "codebookSubset" = "partialAndNonCoherent") from codebooks (a precoding matrix(matrices)) corresponding to TPMIs specified for the UE configured with a full coherent codebook subset (for example, an RRC parameter "codebookSubset" = "fullyAndPartialAndNonCoherent") by DCI for codebook based transmission (specifically, codebooks of TPMI = 12 to 27 in a case of single layer transmission using four antenna ports).

### (Spatial Relation for SRS and PUSCH)

The UE may receive information used for transmission of a reference signal for measurement (for example, a sounding reference signal (SRS)) (SRS configuration information, for example, a parameter in an RRC control element "SRS-Config").

Concretely, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may relate to a given number of SRS resources (may group the given number of SRS resources). Each SRS resource may be identified by an SRS resource indicator (SRI) or an SRS resource ID (Identifier).

The SRS resource set information may include information of an SRS resource set ID (SRS-ResourceSetId), a list of SRS resource IDs (SRS-ResourceId) used in the resource set, an SRS resource type, and SRS usage.

Here, the SRS resource type may indicate any one of periodic SRS (P-SRS), semi-persistent SRS (SP-SRS), and aperiodic SRS (A-SRS or AP-SRS). Note that the UE may transmit a P-SRS and a SP-SRS periodically (periodically after activation), and transmit an A-SRS, based on an SRS request of DCI.

The usage (an RRC parameter "usage" or an L1 (Layer-1) parameter "SRS-SetUse") may be, for example, beam management (beamManagement), codebook based transmission (codebook (CB)), non-codebook based transmission (nonCodebook (NCB)), antenna switching (antennaSwitching), or the like. SRS having a usage of codebook based transmission or non-codebook based transmission may be used to determine a precoder for codebook based or non-codebook based PUSCH transmission based on an SRI.

For example, in a case of codebook based transmission, the UE may determine a precoder for PUSCH transmission, based on an SRI, a transmitted rank indicator (TRI), and a transmitted precoding matrix indicator (TPMI). In a case of non-codebook based transmission, the UE may determine a precoder for PUSCH transmission, based on an SRI.

The SRS resource information may include an SRS resource ID (SRS-ResourceId), the number of SRS ports, SRS port numbers, transmission Comb, SRS resource mapping (for example, time and/or frequency resource position, a resource offset, a resource period, the number of repetitions, the number of SRS symbols, an SRS bandwidth, and the like), hopping related information, an SRS resource type, a sequence ID, an SRS spatial relation information, and the like.

The SRS spatial relation information (for example, an RRC information element "spatialRelationInfo") may indicate spatial relation information between a given reference signal and the SRS. The given reference signal may be at least one of a synchronization signal/broadcast channel (Synchronization Signal/Physical Broadcast Channel (SS/PBCH) block, a channel state information reference signal (CSI-RS), and an SRS (for example, another SRS). The SS/PBCH block may be referred to as a synchronization signal block (SSB).

The SRS spatial relation information may include at least one of an SSB index, a CSI-RS resource ID, and an SRS resource ID as an index of the given reference signal.

Note that, in the present disclosure, the SSB index, the SSB resource ID, and an SSBRI (SSB Resource Indicator) may be interchangeably interpreted. The CSI-RS index, the CSI-RS resource ID, and a CRI (CSI-RS Resource Indicator) may be interchangeably interpreted. The SSB index, the SRS resource ID, and the SRI may be interchangeably interpreted.

The SRS spatial relation information may include a serving cell index, a BWP index (BWP ID), and the like corresponding to the given reference signal.

In NR, transmission of an uplink signal may be controlled based on presence/absence of beam correspondence (BC). The BC may be, for example, the capability of a given node (for example, a base station or a UE) to determine a beam (transmit beam, Tx beam) used for transmission of a signal, based on a beam (receive beam, Rx beam) used for reception of a signal.

Note that the BC may also be referred to as a transmit/receive beam correspondence (Tx/Rx beam correspondence), beam reciprocity, beam calibration, calibrated/non-calibrated, reciprocity calibrated/non-calibrated, correspondence, coincidence, and the like.

For example, in a case with no BC, the UE may use the same beam (spatial domain transmission filter) as that of the SRS (or the SRS resource) specified by a base station, based on a measurement result of one or more SRSs (or SRS resources), to transmit an uplink signal (for example, a PUSCH, a PUCCH, an SRS, or the like).

In contrast, in a case with BC, the UE may use the same or corresponding beam (spatial domain transmission filter) as or to that of a beam (spatial domain reception filter) used for reception of a given SSB or CSI-RS (or a CSI-RS resource), to transmit an uplink signal (for example, a PUSCH, a PUCCH, an SRS, or the like).

In a case that the UE is configured, for a given SRS resource, with spatial relation information related to an SSB or a CSI-RS and an SRS (for example, the case with BC), the UE may use the same spatial domain filter (spatial domain transmission filter) as the spatial domain filter (spatial domain reception filter) for receiving the SSB or the CSI-RS, to transmit the SRS resource. In this case, the UE may assume that a UE receive beam for the SSB or the CSI-RS and a UE transmit beam for the SRS are the same.

In a case that the UE is configured, for a given SRS (a target SRS) resource, with spatial relation information related to the SRS (the target SRS) and another SRS (a reference SRS) (for example, the case without BC), the UE may use the same spatial domain filter (spatial domain transmission filter) as the spatial domain filter (spatial domain transmission filter) for transmitting the reference SRS, to transmit the target SRS resource. In other words, in this case, the UE may assume that a UE transmit beam for the reference SRS and a UE transmit beam for the target SRS are the same.

The UE may determine a spatial relation of a PUSCH scheduled by DCI (for example, DCI format 0_1), based on a value in a given field (for example, an SRS resource indicator (SRI) field) in the DCI. Concretely, the UE may use SRS resource spatial relation information (for example, an RRC information element "spatialRelationInfo") determined based on the value (for example, the SRI) in the given field, for PUSCH transmission.

In a case of using codebook based transmission for a PUSCH, the UE may be configured with two SRS resources through RRC and receive an indication of one of the two SRS resources by DCI (a given field of 1 bit). In a case of using non-codebook based transmission for a PUSCH, the UE may be configured with four SRS resources through RRC and receive an indication of one of the four SRS resources by DCI (a given field of 2 bits). To use a spatial relation other than the spatial relation of the two or four configured by RRC, RRC reconfiguration is needed.

Note that DL-RS can be configured for the spatial relation of SRS resources used for a PUSCH. For example, for an SP-SRS, the UE can be configured with a spatial relation of a plurality of (for example, up to 16) SRS resources by RRC and receive an indication of one of the plurality of SRS resources by a MAC CE.

### (Transmission by Plurality of Panels)

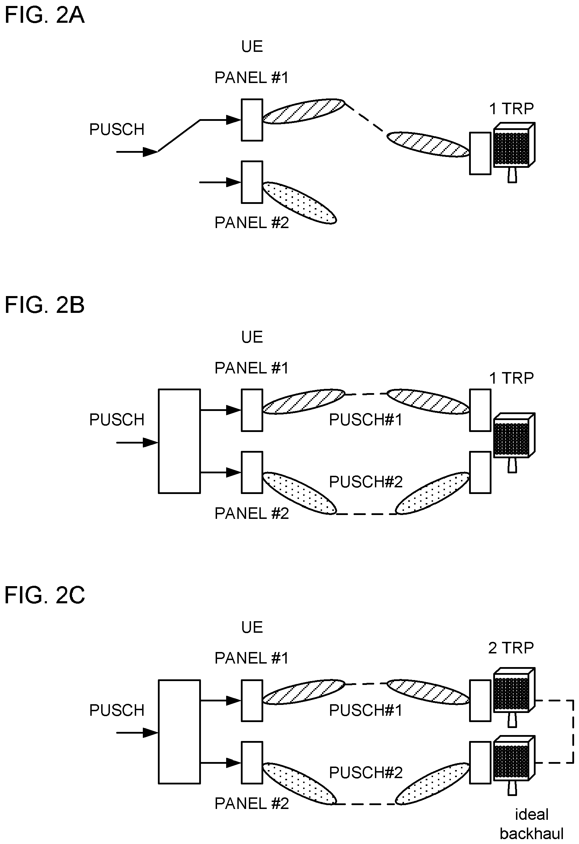

In a UE of Rel. 15 and Rel. 16, only one beam and one panel are used for UL transmission at one time point (FIG. 2A). In Rel. 17, to improve UL throughput and reliability, simultaneous UL transmission of a plurality of beams and a plurality of panels is studied for one or more TRPs.

For simultaneous UL transmission using a plurality of beams and a plurality of panels, reception by one TRP including a plurality of panels (FIG. 2B) or reception by two TRPs with ideal backhaul (FIG. 2C) is under study. A single PDCCH for scheduling a plurality of PUSCHs (for example, simultaneous transmission of PUSCH #1 and PUSCH #2) is under study. It is studied to support panel-specific transmission and introduce panel IDs.

The base station may use a UL TCI or a panel ID to configure or indicate panel-specific transmission for UL transmission. The UL TCI (UL TCI state) may be based on signaling similar to that of a DL beam indication supported in Rel. 15. The panel ID may be implicitly or explicitly applied to transmission of at least one of a target RS resource or a target RS resource set, a PUCCH, an SRS, and a PRACH. In a case where the panel ID is explicitly notified, the panel ID may be configured in at least one of the target RS, a target channel, and a reference RS (for example, a DL RS resource configuration or spatial relation information).

### (UL TCI State)

In Rel. 16 NR, it is studied to use a UL TCI state as a UL beam indication method. Notification of a UL TCI state is similar to UE notification of a DL beam (a DL TCI state). Note that the DL TCI state and a TCI state for PDCCH/PDSCH may be interchangeably interpreted.

A channel/signal by which the UL TCI state is configured (specified) (which may be referred to as a target channel/RS) may be at least one of, for example, a PUSCH (a DMRS in a PUSCH), a PUCCH (a DMRS in a PUCCH), a random access channel (a Physical Random Access Channel (PRACH)), an SRS, and the like.

An RS (a source RS) having a QCL relation with the channel/signal may be a DL RS (for example, an SSB, a CSI-RS, a TRS, or the like) or a UL RS (for example, an SRS, an SRS for beam management, or the like), for example.

In the UL TCI state, the RS having the QCL relation with the channel/signal may be associated with a panel ID for receiving or transmitting the RS. This association may be explicitly configured (or specified) by higher layer signaling (for example, RRC signaling, a MAC CE, or the like) or may be implicitly determined.

The correspondence between the RS and the panel ID may be included in UL TCI state information for configuration or may be included in at least one of resource configuration information, spatial relation information of the RS, and the like, for configuration.

A QCL type indicated by the UL TCI state may be any of existing QCL types A to D or any other QCL type, or may include a given spatial relation, a related antenna port (port index), and the like.

When a related panel ID is specified (for example, specified by DCI) for UL transmission, the UE may use a panel corresponding to the panel ID to perform the UL transmission. The panel ID may be associated with the UL TCI state, and when a UL TCI state is specified (or activated) for a given UL channel/signal, the UE may identify a panel to use in the UL channel/signal transmission, based on the panel ID related to the UL TCI state.

### (Issues)

However, any candidate for a multi-panel (multi-beam) simultaneous UL transmission scheme (multi-panel UL transmission scheme) is not clear. It is not clear how to indicate a plurality of PUSCHs by a single PDCCH, for the multi-panel UL transmission scheme. It is not clear how to differentiate between single-panel UL transmission and multi-panel UL transmission. It is not clear, when one or more multi-panel UL transmission schemes are supported, how to differentiate between single-panel UL transmission and multi-panel UL transmission.

In view of these, the inventors of the present invention came up with the idea of a method in which a UE performs simultaneous UL transmission using a plurality of panels.

Embodiments according to the present disclosure will be described in detail with reference to the drawings as follows. The radio communication methods according to respective embodiments may each be employed individually, or may be employed in combination.

In the present disclosure, a panel, a UE panel, an RS port group, a DMRS port group, an SRS port group, an RS resource group, a DMRS resource group, an SRS resource group, a beam group, a TCI state group, a spatial relation group, an SRS resource indicator (SRI) group, an antenna port group, an antenna group, and a CORESET group may be interchangeably interpreted.

The panel may be associated with at least one of a panel ID, a UL TCI state, a UL beam, an L beam, a DL RS resource, and a spatial relation information.

### (Radio Communication Method)

### <Embodiment 1>

A multi-panel UL transmission scheme or a multi-panel UL transmission scheme candidate may be at least one of schemes 1 to 3 (multi-panel UL transmission schemes 1 to 3) below. Only one of schemes 1 to 3 may be supported. A plurality of schemes including at least one of schemes 1 to 3 may be supported, and one of the plurality of schemes may be configured for a UE.

### <<Scheme 1>>

### Coherent Multi-panel UL Transmission

A plurality of panels may be synchronized with each other. All layers are mapped to all the panels. A plurality of analog beams are indicated. An SRS resource indicator (SRI) field may be enhanced. This scheme may use four layers at maximum for UL.

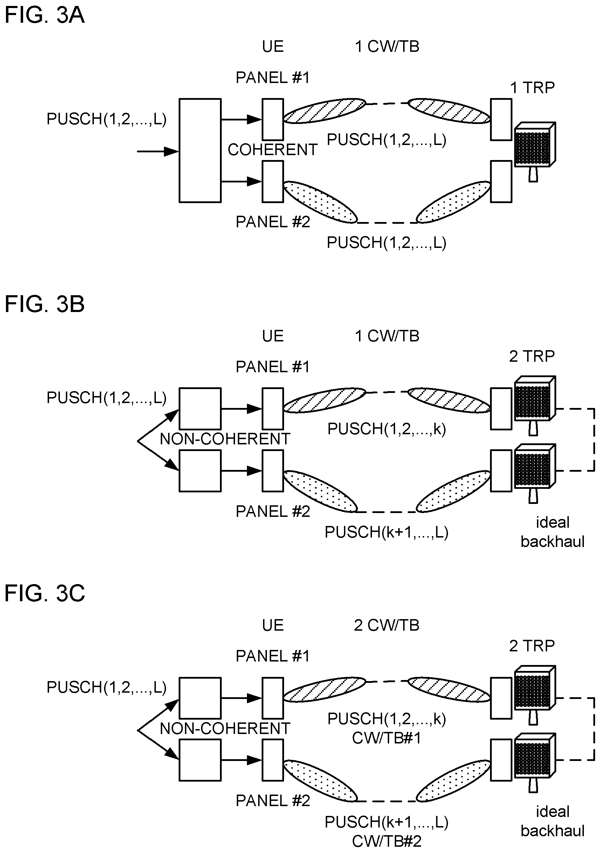

In the example in FIG. 3A, the UE maps one codeword (CW) or one transport block (TB) to L layers (PUSCHs (1, 2, ..., L)) and transmits the L layers from each of two panels. Panel #1 and panel #2 are coherent. Scheme 1 can obtain gain due to diversity. The total number of layers of the two panels is 2L. When the maximum value of the total number of layers is four, the maximum number of the number of layers per panel is 2.

### <<Scheme 2>>

### Non-coherent Multi-panel UL Transmission Using One Codeword (CW) or Transport Block (TB)

A plurality of panels need not necessarily be synchronized with each other. Different layers are mapped to different panels and one CW or TB for PUSCHs from the plurality of panels. The layer corresponding to the one CW or TB may be mapped to the plurality of panels. This scheme may use four layers at maximum or eight layers at maximum for UL. In a case of supporting eight layers at maximum, this scheme may support one CW or TB using eight layers at maximum.

In the example in FIG. 3B, the UE maps one CW or one TB to k layers (PUSCH (1, 2, ..., k)) and L-k layers (PUSCHs (k+1, k+2, ..., L)), and transmits the k layers from panel #1 while transmitting L-k layers from panel #2. Scheme 2 can obtain gain due to multiplexing and diversity. The total number of layers in the two panels is L.

### <<Scheme 3>>

### Non-coherent Multi-panel UL Transmission Using Two CWs or TBs

A plurality of panels need not necessarily be synchronized with each other. Different layers are mapped to different panels and two CWs or TBs for PUSCHs from the plurality of panels. The layer corresponding to one CW or TB may be mapped to one panel. The layers corresponding to the plurality of CWs or TBs may be mapped to the different panels. This scheme may use four layers at maximum or eight layers at maximum for UL. In a case of supporting eight layers at maximum, this scheme may support four layers at maximum per CW or TB.

In the example in FIG. 3C, the UE maps CW #1 or TB #1 among the two CWs or the two TBs to k layers (PUSCHs (1, 2, ..., k)) while mapping CW #2 or TB #2 to L-k layers (PUSCHs (k+1, k+2, ..., L)), and transmits the k layers from panel #1 while transmitting L-k layers from panel #2. Scheme 3 can obtain gain due to multiplexing and diversity. The total number of layers in the two panels is L.

### <Embodiment 2>

A plurality of PUSCHs may be indicated by a single PDCCH. One piece of DCI may schedule a plurality of PUSCHs. The DCI may include one or more SRI fields for indicating panels (beams or SRS resources) of the plurality of PUSCHs. One or more SRI fields may indicate a plurality of SRS resources. A plurality of SRS resources may correspond to a plurality of respective PUSCHs (panels or beams). The UE may use each of a plurality of SRS resources for transmission of a corresponding PUSCH.

A single PDCCH may indicate a plurality of PUSCHs in accordance with any one of embodiments 2-1 to 2-3 below. Embodiments 2-1 to 2-3 correspond to respective schemes 1 to 3 described above.

### <<Embodiment 2-1>>

For scheme 1, a plurality of PUSCHs may be indicated by a single PDCCH.

An SRI field may be enhanced for indication of a plurality of PUSCHs.

For codebook (CB) based transmission (codebook-based transmission) (an SRS resource set with usage of CB based transmission), the SRI field may follow any of options 1 and 2 below.

### [Option 1]

A plurality of SRI fields in DCI may be used for indication of a plurality of PUSCHs from a plurality of panels. For example, DCI scheduling two PUSCHs may include two SRI fields.

### [Option 2]

One SRI field in DCI may be maintained. The size of the SRI field for a plurality of PUSCHs may be the same as the size of the SRI field for one PUSCH or may be larger than the size of the SRI field for one PUSCH. The value of one SRI field may be associated with one or two pieces of SRS resource indication information for one or two PUSCHs. This association may be configured for the UE through RRC signaling, indicated to the UE through a combination of RRC signaling and a MAC CE, or defined in a table for the physical layer (PHY) specification.

### [[Example 2-1]]

An index indicated by one SRI field in the DCI may be associated with one or two pieces of SRS resource indication information from the same or different SRS resource sets for one or two PUSCHs. The number of SRS resources or SRS resource sets configured for transmission of a plurality of PUSCHs may be twice the number for a single PUSCH.

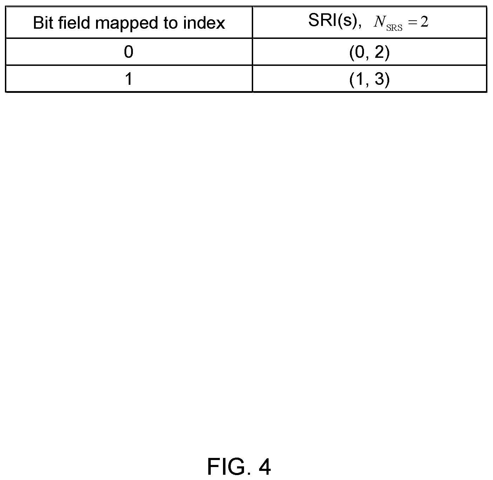

In the example of a table in FIG. 4, values 0 and 1 of SRI are associated with panel #1, and values 2 and 3 of SRI are associated with panel #2. SRS resources corresponding to SRIs indicating 0 and 1 and SRS resources corresponding to SRIs indicating 2 and 3 of SRI may be configured in the same SRS resource set or configured in different SRS resource sets. For example, in a case where an index indicated by one SRI field indicates 0, this index corresponds to the values (0, 2) of SRI, and hence the UE uses a spatial filter corresponding to the SRI indicating 0 for the layer from panel #1 while using a spatial filter corresponding to the SRI indicating 2 for the layer from panel #1.

### [[Example 2-2]]

An index indicated by one SRI field may correspond to one piece of SRS resource indication information. Each SRS resource configured or indicated by higher layer signaling (RRC signaling, or RRC signaling and a MAC CE) may have one spatial relation information configuration including one or two spatial relation information (SpatialRelationInfo) configurations or one or two different QCL reference signal (referenceSignal) configurations. The number of SRS resources or SRS resource sets configured for transmission of a plurality of PUSCHs may be the same as the number for transmission of a single PUSCH.

When a given index indicated by an SRI field is associated with one piece of spatial relation information while another index is associated with a plurality of pieces of spatial relation information, switching may be dynamically performed between transmission of a single PUSCH and transmission of a plurality of PUSCHs.

For non-codebook (NCB) based transmission (non-codebook-based transmission) (an SRS resource set with usage of NCB based transmission), the SRI field may follow any of options 3 and 4 below.

### [Option 3]

A plurality of SRI fields in DCI may be used for indication of a plurality of PUSCHs from a plurality of panels. For example, DCI scheduling two PUSCHs may include two SRI fields.

### [Option 4]

One SRI field in DCI may be maintained. The size of the SRI field for a plurality of PUSCHs may be the same as the size of the SRI field for one PUSCH or may be larger than the size of the SRI field for one PUSCH. For each SRI indicated by an index indicated by the SRI field, one or two pieces of SRS resource indication information for one or two PUSCHs may be associated. This association may be configured for the UE through RRC signaling, indicated to the UE through a combination of RRC signaling and a MAC CE, or defined in a table for the physical layer (PHY) specification.

### [[Example 4-1]]

For each index indicated by one SRI field in DCI, one or two pieces of SRS resource indication information may be associated.

The index of the SRI field may be associated with one SRI or may be associated with a plurality of SRIs. For each layer, the UE may use the first SRI (SRS #i) associated with the index of the SRI field for transmission from panel #1 while using the second SRI (SRS #j) associated with the index of the SRI field for transmission from panel #2.

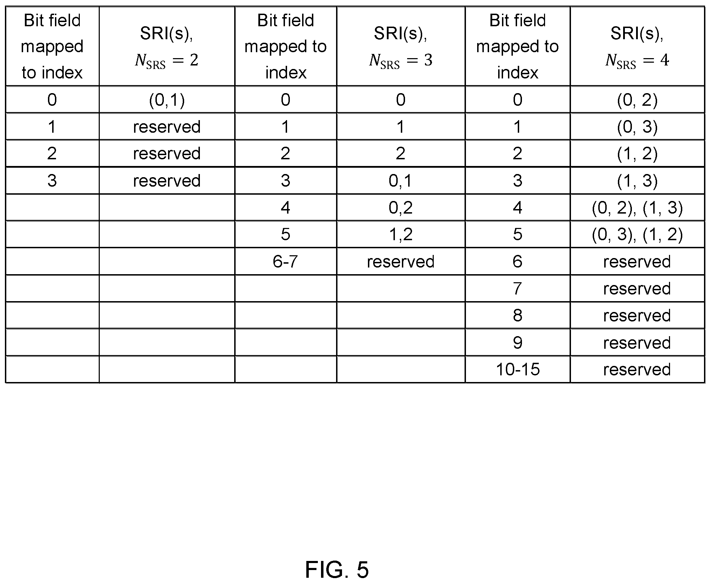

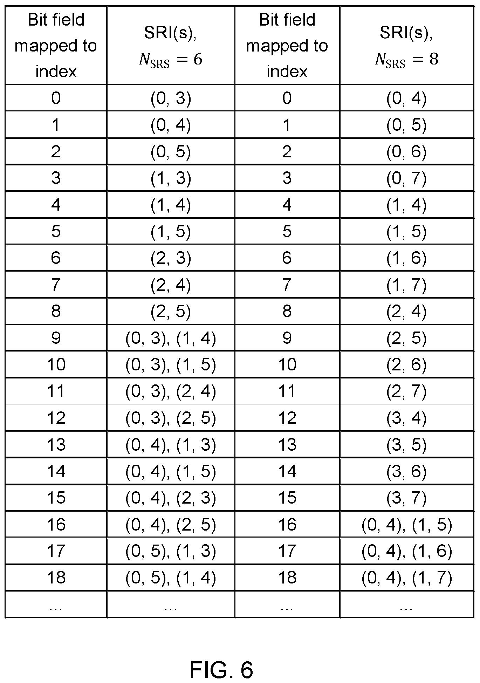

FIGS. 5 and 6 show tables for method 1 for NCB based transmission. In this example, N_{SRS} denotes the total number of SRS resources corresponding to a plurality of panels. In N_{SRS} = 2, only one layer is supported. Although this example includes a case of N_{SRS} = 3, odd-numbered N_{SRS} need not necessarily be supported.

In a case of N_{SRS} = 4, two layers at maximum are supported. In this case, values 0 and 1 of SRI are associated with panel #1, and the values 2 and 3 of SRI are associated with panel #2. In a case of N_{SRS} = 6, values 0, 1, and 2 of SRI are associated with panel #1, and values 3, 4, and 5 of SRI are associated with panel #2. In a case of N_{SRS} = 8, values 0, 1, 2, and 3 of SRI are associated with panel #1, and values 4, 5, 6, and 7 of SRI are associated with panel #2.

To support many (all) combinations of SRIs for a plurality of panels, the size of the SRI field may be increased. To maintain the size of the SRI field, the UE may be configured with several combinations for DCI indications through RRC signaling, or configured combinations may be narrowed down by a MAC CE.

In a case of multi-panel UL transmission, the number of SRS resources or SRS resource sets to be configured may be twice the number for a case of single-panel UL transmission.

### [[Example 4-2]]

Each index indicated by one SRI field may correspond to one piece of SRS resource indication information. Each SRS resource configured or indicated by higher layer signaling (RRC signaling, or RRC signaling and a MAC CE) may have one spatial relation information configuration including one or two spatial relation information (SpatialRelationInfo) configurations or one or two different QCLed reference signal (referenceSignal) configurations. In a case of multi-panel UL transmission, the number of SRS resources or SRS resource sets to be configured may be the same as the number for a case of single-panel UL transmission.

### [Variations]

In Rel. 15, RRC configurations of a plurality of SRS resource sets having CB based transmission or NCB based transmission as usage in common are not allowed.

A plurality of SRS resource sets may be configured, and some of the configured SRS resource sets may be activated by a MAC CE. In a case where a single SRS resource is configured for each SRS resource set having usage of CB based transmission or NCB based transmission and a plurality of SRS resource sets are activated, the UE may use an SRS resource in a corresponding one of active SRS resource sets for each PUSCH transmission. For example, the SRS resource set corresponding to each of two panels may be activated.

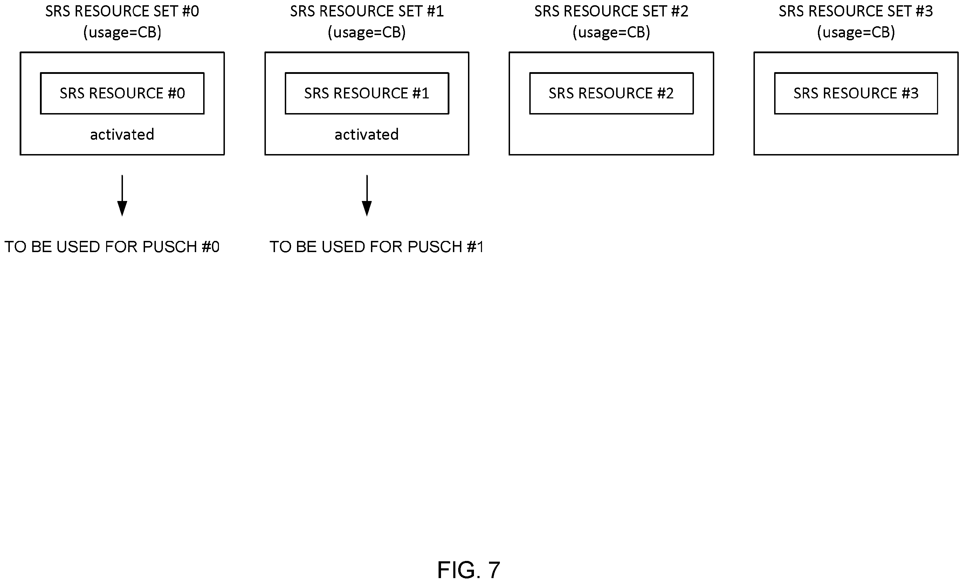

In the example in FIG. 7, SRS resource sets #0 to #3 having CB based transmission as usage are configured. SRS resource sets #0 to #3 respectively include SRS resources #0 to #3. SRS resource sets #0 and #1 are activated.

Each SRS resource set and a PUSCH (or a panel) may be associated with each other based on the ascending order of SRS resource set IDs and the ascending order of indications of PUSCHs. Each SRS resource set and a PUSCH from a given panel may be associated with each other based on the ascending order of SRS resource set IDs and the ascending order of panel IDs. For example, in a case where PUSCHs #0 and #1 are indicated by DCI, the UE associates PUSCH #0 with SRS resource set #0 and associates PUSCH #1 with SRS resource set #1. The UE uses SRS resource #0 in SRS resource set #0 for transmission of PUSCH #0 and uses SRS resource #1 in SRS resource set #1 for transmission of PUSCH #1.

According to this variation, since the number of SRS resources in each SRS resource set is one, no SRI field is needed for beam indication of a single PUSCH or a plurality of PUSCHs.

### <<Embodiment 2-2>>

For scheme 2, a plurality of PUSCHs may be indicated by a single PDCCH.

Enhancement of an SRI field for scheme 2 may be different from the enhancement of an SRI field in Embodiment 2-1 in the following respects.

The UE may use, for layers 1, 2, ..., k among L layers, SRI (SRS #i) indicated first by the SRI field in DCI, as a spatial filter for UL transmission from panel 1. The UE may use, for remaining layers k+1, k+2, ..., L among the L layers, SRI (SRS #j) indicated second by the SRI field in DCI, as a spatial filter for UL transmission from panel 2.

k may be in conformity with a predefined rule or may be explicitly indicated by DCI.

The rule may be k = ceil(L/2) or may be k = floor(L/2).

For the explicit indication of k, a precoding information and number of layers field in DCI may be reused. The size of this field in DCI indicating a plurality of PUSCHs may be the same size as that in DCI indicating a single PUSCH or may be larger than that in DCI indicating a single PUSCH. In a case where the number of all layers is one or two, a table of precoding information and the number of layers for a single PUSCH (Rel. 15) may be reused. In a case where the number of all layers is three or four, two layers for two panels and a TPMI may be indicated by an index indicated by this field.

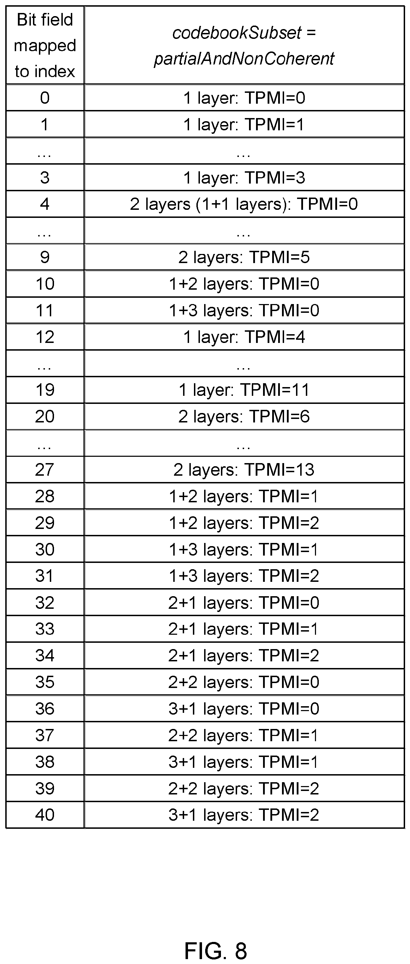

A new table for codewords and mapping of layers may be defined in specifications. FIG. 8 shows an example of association (table) between values of the precoding information and number of layers field and the numbers of layers and TPMIs. This table is a table for four antenna ports in a case where transform precoding is ineffective and the maximum rank (maxRank) is 2, 3, or 4.

In this table, the number of layers in a case of using only panel #1 is expressed as "L layers," and the number k of layers for panel #1 in a case of using panels #1 and #2 and the number L-k of layers for panel #2 are expressed as "k+(L-k) layers". The two layers (L = 2) in this table may be such that the number of layers for panel #1 is 1 (k = 1) and the number of layers for panel #2 is 1. In this table, two layers may be expressed as "2 layer" or may be expressed as "1+1 layers."

### <<Embodiment 2-3>>

For scheme 3, a plurality of PUSCHs may be indicated by a single PDCCH.

In enhancement for an SRI field for scheme 3, in addition to enhancement of an SRI field in Embodiment 2-2 to support two CWs or TBs for different TRPs, at least one of a modulation and coding scheme (MCS) field, a precoding information and number of layers field, a transmission power control (TPC) command for scheduled PUSCH field, a frequency domain resource assignment field, and a time domain resource assignment field in DCI may be enhanced to indicate a plurality of PUSCHs. Different TRPs may have different pathlosses or may have different SINRs.

### [MCS Field]

An MCS field may be enhanced for indication of a plurality of PUSCHs. A plurality of MCS fields in DCI may be used for indication of a plurality of PUSCHs from a plurality of panels. For example, DCI may include two MCS fields corresponding to two respective PUSCHs.

### [Precoding Information and Number of Layers Field]

The precoding information and number of layers field may be enhanced for indication of at least one of a layer and a TPMI for each of a plurality of PUSCHs in codebook based UL transmission.

### [[Option 1]]

To indicate a plurality of PUSCHs, a plurality of "precoding information and number of layers" fields in DCI may be used.

### [[Option 2]]

By enhancement of a table defined in specifications, one "precoding information and number of layers" field may be maintained for indication of a plurality of PUSCHs. The sizes of the "precoding information and number of layers" fields for a plurality of PUSCHs may be the same as the size for a single PUSCH or may be larger than the size for a single PUSCH.

To indicate layers and ranks, k similar to that in Embodiment 2-2 may be used. k may be in conformity with a predefined rule or may be explicitly indicated by DCI, as in Embodiment 2-2.

For indication of a TPMI, one TPMI indication may be maintained for each index indicated in the "precoding information and number of layers" field. One TPMI indication may be a joint TPMI. A TPMI may be applied to a plurality of panels.

For indication of a TPMI, two TPMIs may be indicated for each index indicated in the "precoding information and number of layers" field in the new table defined in specifications. Each TPMI may be applied to one panel.

### [TPC Command for Scheduled PUSCH Field]

A TPC command for scheduled PUSCH field may be enhanced for indication of TPC commands for a plurality of PUSCHs.

### [[Option 1]]

A plurality of TPC command fields in DCI may be used for panel or beam-specific TPC.

### [[Option 2]]

One TPC command field may be maintained. At least one of RRC signaling and a MAC CE may be used for mapping one TPC index to a plurality of sets of TPC parameters for a plurality of PUSCHs. A new table for mapping of TPC commands may be defined in specifications. In this table, indices may correspond to a plurality of sets for TPC parameters for a plurality of PUSCHs.

### [Frequency Domain Resource Assignment Field / Time Domain Resource Assignment Field]

At least one resource assignment field of the frequency domain resource assignment field and the time domain resource assignment field may be enhanced to indicate TPC commands for a plurality of PUSCHs.

### [[Option 1]]

A plurality of resource assignment fields in DCI may be used for panel or beam-specific resource assignment.

### [[Option 2]]

One resource assignment field may be maintained. At least one of RRC signaling and a MAC CE may be used for mapping, the resource assignment field, to a plurality of sets of time or frequency resource assignment tables for a plurality of PUSCHs. A new table for mapping of the resource assignment field may be defined in specifications. In this table, indices may correspond to a plurality of sets of time or frequency resource assignment tables for a plurality of PUSCHs.

In a case where a plurality of PUSCHs are not overlapping in terms of time domain resource assignment, the UE only needs to use one beam for PUSCH transmission at one time point, and hence UE operation is simplified. The UE may report UE capability information indicating at least one of how many spatial relations can be used simultaneously, and which one is supported among a case where a plurality of PUSCHs transmitted simultaneously overlap fully, a case where a plurality of PUSCHs transmitted simultaneously overlap partially, and a case where none of a plurality of PUSCHs transmitted simultaneously overlap.

A plurality of PUSCHs indicated by a single PDCCH may have the same time domain resource assignment and the same frequency domain resource assignment.

### <Embodiment 3>

A single-panel UL transmission scheme (for example, Rel. 15 or Rel. 16) and at least one of schemes 1 to 3 of multi-panel UL transmission (for example, Rel. 17) may be distinguished from each other according to Embodiments 3-1 and 3-2 below.

### <<Embodiment 3-1>>

Which scheme is to be used may be explicitly notified (configured or indicated) by at least one of RRC signaling, a MAC CE, and DCI.

### <<Embodiment 3-2>>

Which scheme is to be used may be implicitly notified (configured or indicated) by at least one of RRC signaling, a MAC CE, and DCI. The UE may determine a UL transmission scheme, based on at least one of Conditions 1 to 6 below.

### [Condition 1]

When it is notified that one SRI index corresponds to two SRS resource indications, that two pieces of spatial relation information are configured for one SRS resource, or that two different QCL reference signals are configured for one piece of spatial relation information, the UE may regard that a multi-panel UL transmission scheme (scheme 1, 2, or 3) is used instead of single-panel transmission scheme.

### [Condition 2]

When a plurality of SRI fields are included in DCI, the UE may regard that a multi-panel UL transmission scheme (scheme 1, 2, or 3) is used.

### [Condition 3]

When a new table (PHY table) for SRS resource indication is configured, the UE may regard that a multi-panel UL transmission scheme (scheme 1, 2, or 3) is used.

### [Condition 4]

When a new table (PHY table) for the precoding information and number of layers field, the table including two layer indications per index, is configured, the UE may regard that multi-panel UL transmission scheme 2 or 3 is used.

### [Condition 5]

When a new table (PHY table) for the precoding information and number of layers field, the table including at least one of two layer indications and two TPMI indications per index, is configured, the UE may regard that multi-panel UL transmission scheme 3 is used.

### [Condition 6]

When DCI includes a plurality of MCS fields or a plurality of "precoding information and number of layers" fields, the UE may regard that multi-panel UL transmission scheme 3 is used.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

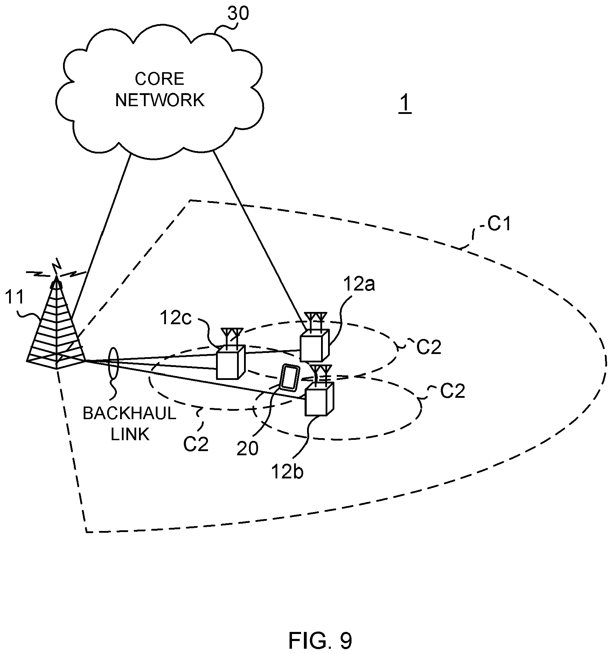

FIG. 9 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

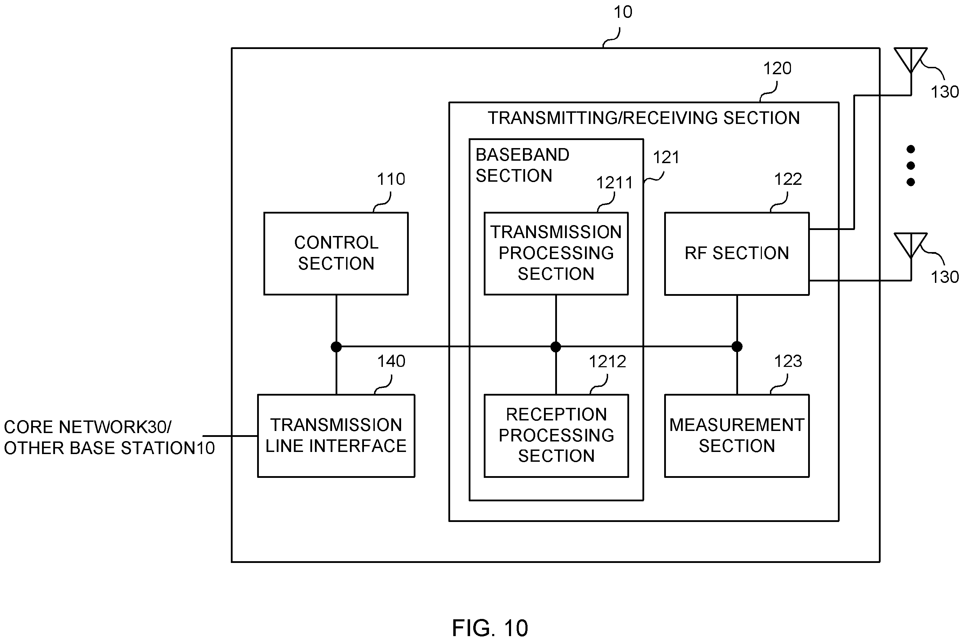

FIG. 10 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may receive, from the user terminal 20, at least one of capability information indicating a supported mode for full power transmission (for example, mode 1 or mode 2) and capability information indicating a transmitted precoding matrix indicator (TPMI) group supporting full power transmission.

The control section 110 may perform control for notifying the user terminal 20 of higher layer signaling for configuring codebook subset for full power transmission.

### (User Terminal)

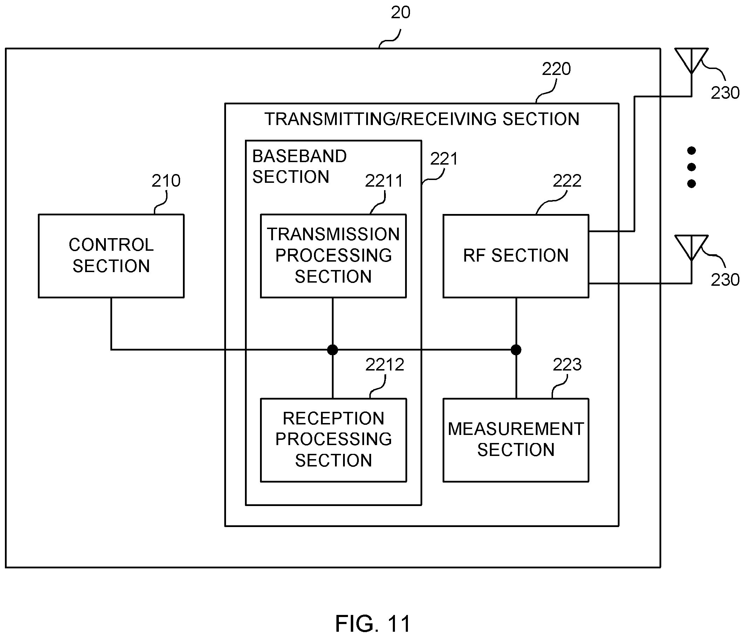

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive one piece of downlink control information for scheduling a plurality of physical uplink shared channels (PUSCHs) to be transmitted simultaneously. The downlink control information may include one or more sounding reference signal (SRS) resource indication fields. The one or more SRS resource indication fields may indicate a plurality of SRS resources. The plurality of SRS resources may correspond to a plurality of respective PUSCHs. The control section 210 may use each of the plurality of SRS resources for transmission of a corresponding one of the PUSCHs.

The plurality of SRS resources may correspond to different panels.

The downlink control information may include a plurality of SRS resource indication fields. The plurality of SRS resource indication fields may correspond to the plurality of respective SRS resources.

The downlink control information may include one SRS resource indication field. The value of the one SRS resource indication field may be associated with the plurality of SRS resources.

The transmitting/receiving section 220 may receive information indicating one of a plurality of transmission schemes using a single panel or a plurality of panels. The control section 210 may use the transmission scheme indicated in the information, to use the transmission scheme for the plurality of physical uplink shared channels.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

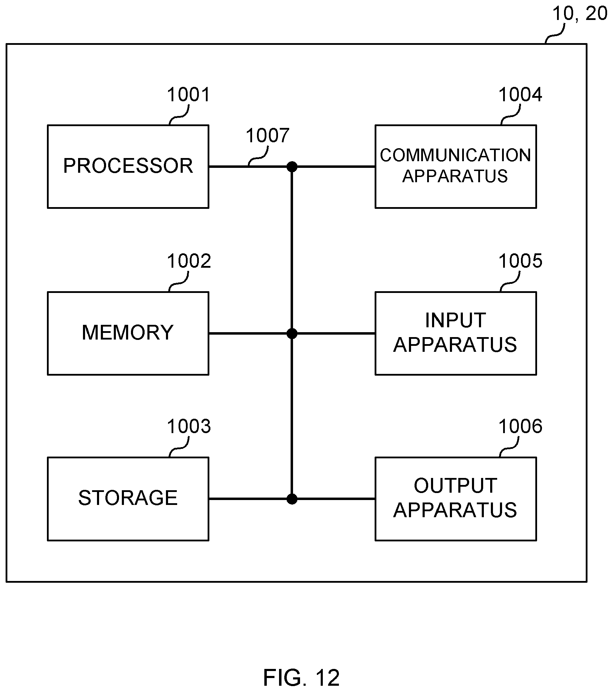

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the assignment of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource assignment in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names assigned to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives one piece of downlink control information for scheduling a plurality of physical uplink shared channels (PUSCHs) to be transmitted simultaneously, the downlink control information including one or more sounding reference signal (SRS) resource indication fields, the one or more SRS resource indication fields indicating a plurality of SRS resources, the plurality of SRS resources corresponding to the plurality of PUSCHs; and
a control section that uses each of the plurality of SRS resources for transmission of a corresponding one of the PUSCHs.

2. The terminal according to claim 1, wherein
the plurality of SRS resources correspond to different panels.

3. The terminal according to claim 1 or 2, wherein
the downlink control information includes a plurality of SRS resource indication fields, and
the plurality of SRS resource indication fields correspond to the plurality of SRS resources.

4. The terminal according to claim 1 or 2, wherein
the downlink control information includes one SRS resource indication field, and
a value of the one SRS resource indication field is associated with the plurality of SRS resources.

5. The terminal according to any one of claims 1 to 4, wherein
the receiving section receives information indicating one of a plurality of transmission schemes using a single panel or a plurality of panels, and
the control section uses a transmission scheme indicated in the information, to use the transmission scheme for the plurality of physical uplink shared channels.

6. A radio communication method for a terminal, the radio communication method comprising:
receiving one piece of downlink control information for scheduling a plurality of physical uplink shared channels (PUSCHs) to be transmitted simultaneously, the downlink control information including one or more sounding reference signal (SRS) resource indication fields, the one or more SRS resource indication fields indicating a plurality of SRS resources, the plurality of SRS resources corresponding to the plurality of PUSCHs; and
using each of the plurality of SRS resources for transmission of a corresponding one of the PUSCHs.
